(19) Europäisches Patentamt
European Patent Office
Office européen des brevets

(11) Veröffentlichungsnummer : **0 042 535**
**B1**

(12) # EUROPÄISCHE PATENTSCHRIFT

(45) Veröffentlichungstag der Patentschrift : **11.05.83**

(51) Int. Cl.³ : **C 09 B 67/22**, C 09 B 67/48, C 09 B 67/10

(21) Anmeldenummer : **81104429.6**

(22) Anmeldetag : **10.06.81**

(54) **Farbstoffmischungen, Verfahren zu deren Herstellung und zum Färben von hydrophoben Fasern.**

(30) Priorität : **21.06.80 DE 3023330**

(43) Veröffentlichungstag der Anmeldung : **30.12.81 Patentblatt 81/52**

(45) Bekanntmachung des Hinweises auf die Patenterteilung : **11.05.83 Patentblatt 83/19**

(84) Benannte Vertragsstaaten : **CH DE FR GB IT LI**

(56) Entgegenhaltungen :
**DE A 2 928 432**
**CHEMICAL ABSTRACTS, Band 89, Nr. 9, 30. Oktober 1978, Seite 60, Nr. 148078q Columbus, Ohio, U.S.A.**

(73) Patentinhaber : **BAYER AG**
**Zentralbereich Patente, Marken und Lizenzen**
**D-5090 Leverkusen 1, Bayerwerk (DE)**

(72) Erfinder : **Brandt, Horst, Dr.**
**Antoniusstrasse 4**
**D-5068 Odenthal (DE)**
Erfinder : **Hörnle, Reinhold, Dr.**
**Hufelandstrasse 42**
**D-5000 Köln 80 (DE)**
Erfinder : **Büchele, Richard**
**Ackerstrasse 27**
**D-5068 Odenthal (DE)**
Erfinder : **Wiegner, Dieter**
**Nothauser Feld 4**
**D-5068 Odenthal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 042 535 B1

Farbstoffmischungen, Verfahren zu deren Herstellung und zum Färben von hydrophoben Fasern

Gegenstand der Erfindung sind Farbstoffmischungen bestehend aus 75-99, vorzugsweise 85-97 Gewichtsprozenten eines oder mehrerer Farbstoffe der Formel

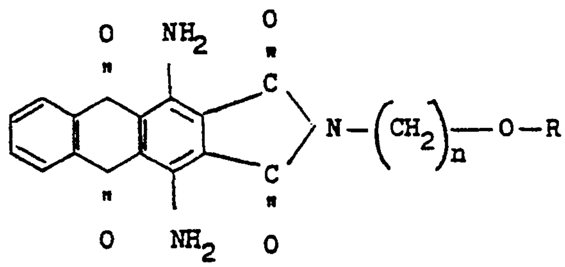

(I)

worin

R = $C_1$-$C_4$-Alkyl und

n = 2, 3 oder 4 bedeuten,

und 1 bis 25, vorzugsweise 3-15 Gewichtsprozenten eines oder mehrerer Farbstoffe der Formel

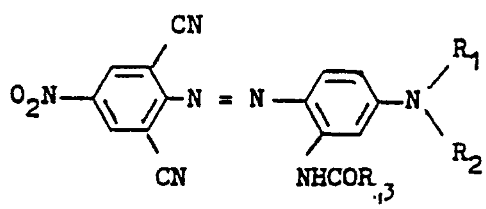

(II)

worin

$R_1$ und $R_2$ = $C_1$-$C_5$-Alkyl und

$R_3$ = $C_1$-$C_2$-Alkyl bedeuten.

Diese Mischungen sind dadurch gekennzeichnet, daß sie in Form von Mischkristallen vorliegen, die durch ihr Röntgenbeugungsdiagramm mit den Reflexintensitäten 100, 26, 14 und 54 bei den Glanzwinkeln θ 5,75°, 10,0°, 16,2°, 26,4° charakterisiert sind.

Die Einzelfarbstoffe der Formeln I und II sind bekannt (vgl. US-A-2 628 963, DE-C-939 044 und 945 112 sowie DE-C 1 544 563 und US-A 3 962 209).

Auch die einfachen Gemenge dieser Farbstoffe sind in der Literatur beschrieben (vgl. JA-A 53/061 781).

Im Gegensatz zu diesen Gemengen (vgl. Abbildung 2) sind die Reflexe der Farbstoffe II (vgl. Abbildung 3) in den erfindungsgemäßen Mischkristallen vollständig verschwunden (vgl. Abbildung 1).

Man erhält diese Mischkristalle, wenn man die Gemenge der Farbstoffe in der 2- bis 3-fachen Menge Wasser — zweckmäßigerweise in Gegenwart der 0,5- bis 1-fachen Menge eines üblichen Dispergiermittels — einer Temperung bei 90-110 °C unterweist.

Diese Wärmebehandlung erfolgt zweckmäßigerweise in kontinuierlich arbeitenden Temperungsaggregaten, wie einem Schlangenrohrverdampfer oder in einer beheizten Rührwerksmühle.

Geeignete Dispergiermittel, die man den Farbstoffgemengen zur Herstellung einer wäßrigen, fließfähigen Suspension zusetzt, sind Dinaphthylmethansulfonsäuren, Kondensationsprodukte aus m-Kresol, Formaldehyd und Natriumbisulfit sowie Ligninsulfonate.

Die erfindungsgemäßen Mischkristalle eignen sich hervorragend zum Färben von hydrophoben Fasern, insbesondere Polyesterfasern, wobei sie sich durch hohe Farbstärke und Flottenstabilität auszeichnen. Darüber hinaus zeigen sie nicht oder nur in sehr geringem Maße den unerwünschten Effekt des « catalytic fading », wie er oft bei den Farbstoffen der Formel II beobachtet wird.

Beispiel 1

92 g eines 66 %igen wäßrigen Preßkuchens des Farbstoffs der Formel A werden zusammen mit 3,37 g eines 95 %igen wäßrigen Preßkuchens des Farbstoffs der Formel B, 5 g eines Dispergiermittels auf der Basis von Ligninsulfonsäuren und 36,5 g Wasser zu einer Paste vereinigt, die nach einer Vorzerkleinerung in einer Korundscheibenmühle mit weiteren 38 g Dispergiermittel und 39 g Wasser zu einem Mahlteig mit 48 % Trockengehalt gemischt werden.

Der Teig wird in einer Perlmühle mit Glasperlen 10 Minuten bei Raumtemperatur, anschließend 30 Minuten bei einer Produkttemperatur am Auslauf von 85 °C gemahlen, danach noch zweimal bei

Raumtemperatur. Aus diesem Mahlteig wird durch Sprühtrocknung ein Farbstoff-Pulver erhalten, welches das in Fig. 1 gezeigte Röntgenspektrum ergibt. Die Farbstoffmischung zeichnet sich beim Färben von Polyesterfasern nach der HT-Methode durch ausgezeichnete Flottenstabilität aus.

Farbstoff der Formel A

Farbstoff der Formel B

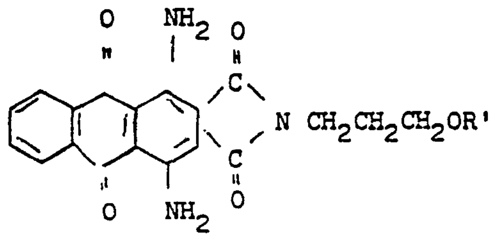

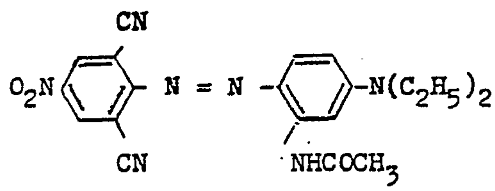

(R' = $CH_3$, $C_2H_5$ und $CH(CH_3)_2$ im Verhältnis 1 : 1 : 1)

Ähnliche Effekte erzielt man, wenn man Mischungen der Farbstoffe im angegebenen Mischungsverhältnis verwendet.

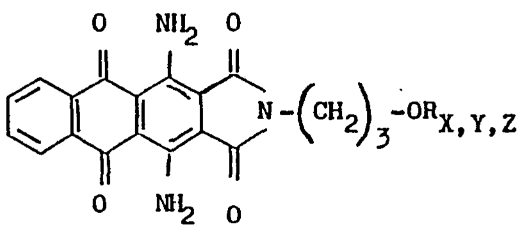 (I)

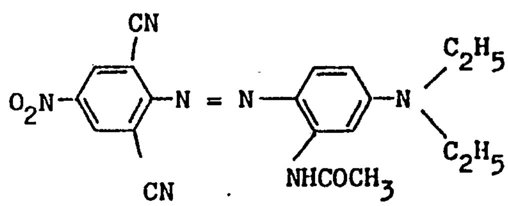

| Nr. | Farbstoff I mit $R_{X,Y,Z}$ | X/Y/Z | Farbstoff I/ Farbstoff II | Farbstärke in % gegenüber Farbstoff I (X = $CH_3$) |
|---|---|---|---|---|
| 1 | $CH_3$, $C_2H_5$, $CH_3CHCH_3$ | 1/1/1 | 9,5/0,5 | 131 |
| 2 | " | 1/1/1 | 9,33/0,67 | 142 |
| 3 | " | 1/1/1 | 9/1 | 173 |
| 4 | " | 1/1/1 | 8,5/1,5 | 196 |
| 5 | $CH_3$ | 1/0/0 | 9/1 | 114 |
| 6 | $C_2H_5$ | 1/0/0 | 9/1 | 131 |
| 7 | $CH_3$, $C_2H_5$ | 1/1/o | 9/1 | 131 |

**Ansprüche**

1. Farbstoffmischungen bestehend aus 75-99, vorzugsweise 85-97 Gewichtsprozente eines oder mehrerer Farbstoffe der Formel

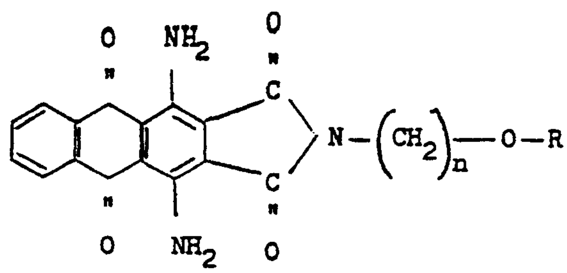

(I)

worin

$R = C_1$-$C_4$-Alkyl und

n = 2, 3 oder 4 bedeuten

und 1 bis 25, vorzugsweise 3-15 Gewichtsprozenten eines oder mehrerer Farbstoffe der Formel

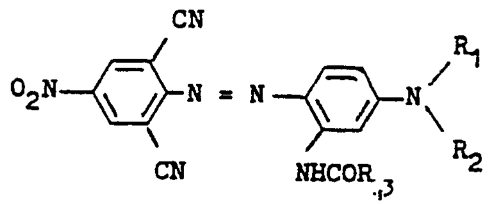

(II)

worin

$R_1$ und $R_2 = C_1$-$C_5$-Alkyl und

$R_3 = C_1$-$C_2$-Alkyl bedeuten,

dadurch gekennzeichnet, daß sie in Form von Mischkristallen vorliegen, die durch ihr Röntgenbeugungsdiagramm mit den Reflexintensitäten 100, 26, 14 und 54 bei den Glanzwinkeln $\theta$ 5,75°, 10,0°, 16,2°, 26,4° charakterisiert sind.

2. Farbstoffmischungen gemäß Anspruch 1, dadurch gekennzeichnet, daß

R = Methyl, Ethyl oder Isopropyl,

n = 3

$R_1$, $R_2$ = Ethyl und

$R_3$ = Methyl bedeuten.

3. Farbstoffmischungen gemäß Anspruch 1 oder 2, dadurch gekennzeichnet, daß

R = Methyl, Ethyl und Isopropyl im Verhältnis 1 : 1 : 1 bedeutet.

4. Verfahren zur Herstellung der Farbstoffmischungen gemäß Anspruch 1, dadurch gekennzeichnet, daß man Gemenge der Farbstoffe der Formeln I und II bei 90-110 °C in wäßrigen Medien tempert.

5. Verfahren zum Färben von hydrophoben Fasernmaterialien, dadurch gekennzeichnet, daß man Farbstoffmischungen gemäß Anspruch 1 verwendet.

## Claims

1. Dyestuff mixtures consisting of 75-99, preferably 85-97, per cent by weight of one or more dyestuffs of the formula

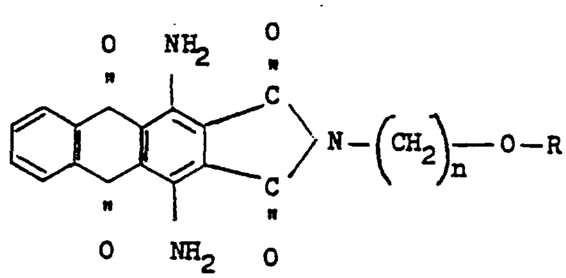

(I)

wherein

R denotes $C_1$-$C_4$-alkyl and

n denotes 2, 3 or 4,

and 1-25, preferably 3-15, per cent by weight of one or more dyestuffs of the formula

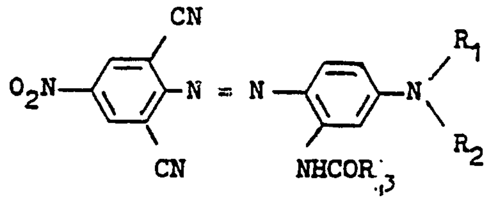

(II)

wherein
$R_1$ and $R_2$ denote $C_1$-$C_5$-alkyl and
$R_3$ denotes $C_1$-$C_2$-alkyl,
characterised in that they exist in the form of mixed crystals, which are characterised by their X-ray diffraction diagram with reflection intensities of 100, 26, 14 and 54 at the angles of incidence $\theta$ of 5.75°, 10.0°, 16.2° and 26.4°.

2. Dyestuff mixtures according to Claim 1, characterised in that
R denotes methyl, ethyl or isopropyl,
n denotes 3,
$R_1$ and $R_2$ denote ethyl and
$R_3$ denotes methyl.

3. Dyestuff mixtures according to Claim 1 or 2, characterised in that
R denotes methyl, ethyl and isopropyl, in the ratio 1 : 1 : 1.

4. Process for the preparation of the dyestuff mixtures according to Claim 1, characterised in that mixtures of the dyestuffs of the formulae I and II are subjected to heat treatment in aqueous media at 90-110 °C.

5. Process for dyeing hydrophobic fibre materials, characterised in that dyestuff mixtures according to Claim 1 are used.

**Revendications**

1. Mélanges de colorants composés de 75-99, de préférence 85-97 % en poids d'un ou plusieurs colorants de formule

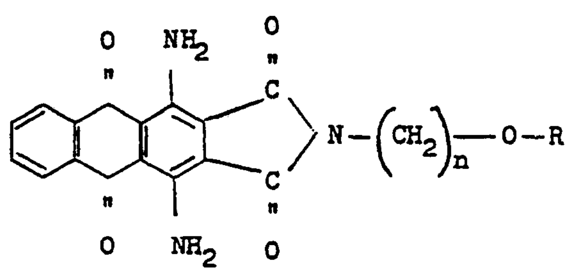

(I)

dans laquelle
R = alkyle en $C_1$ à $C_4$ et
n = 2, 3 ou 4
et de 1 à 25, de préférence 3-15 % en poids d'un ou plusieurs colorants de formule

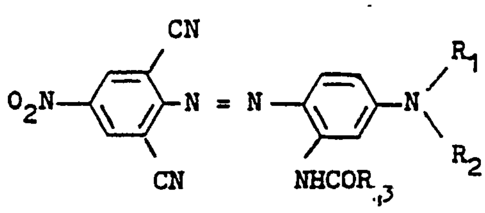

(II)

dans laquelle
$R_1$ et $R_2$ = alkyle en $C_1$ à $C_5$ et
$R_3$ = alkyle en $C_1$-$C_2$,
caractérisés en ce qu'ils se présentent sous la forme de cristaux mixtes qui sont caractérisés par leur diagramme de diffraction des rayons X présentant les intensités de réflexion 100, 26, 14 et 54 pour les angles de brillance $\theta$ de 5,75°, 10,0°, 16,2°, 26,4°.

2. Mélanges de colorants suivant la revendication 1, caractérisés en ce que

R = méthyle, éthyle ou isopropyle,
n = 3
$R_1$, $R_2$ = éthyle et
$R_3$ = méthyle.

3. Mélanges de colorants suivant la revendication 1 ou 2, caractérisés en ce que
R = méthyle, éthyle et isopropyle dans la proportion de 1 : 1 : 1.

4. Procédé de production des mélanges de colorants suivant la revendication 1, caractérisé en ce qu'on étuve le mélange des colorants des formules I et II à 90-110 °C dans des milieux aqueux.

5. Procédé de teinture de matières fibreuses hydrophobes, caractérisé en ce qu'on utilise des mélanges de colorants suivant la revendication 1.

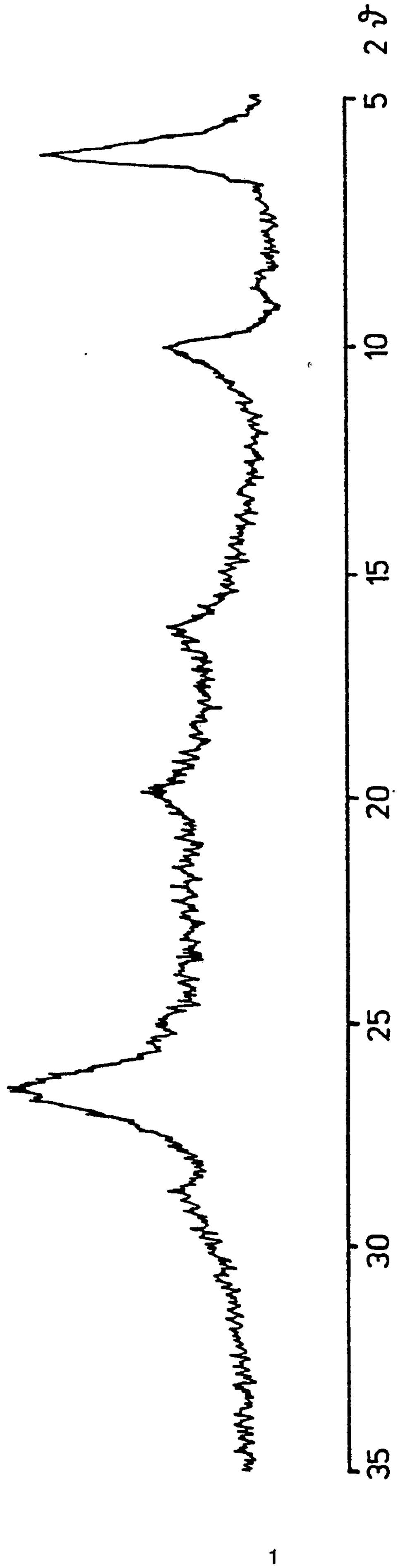


FIG. 1 (Mischkristall)

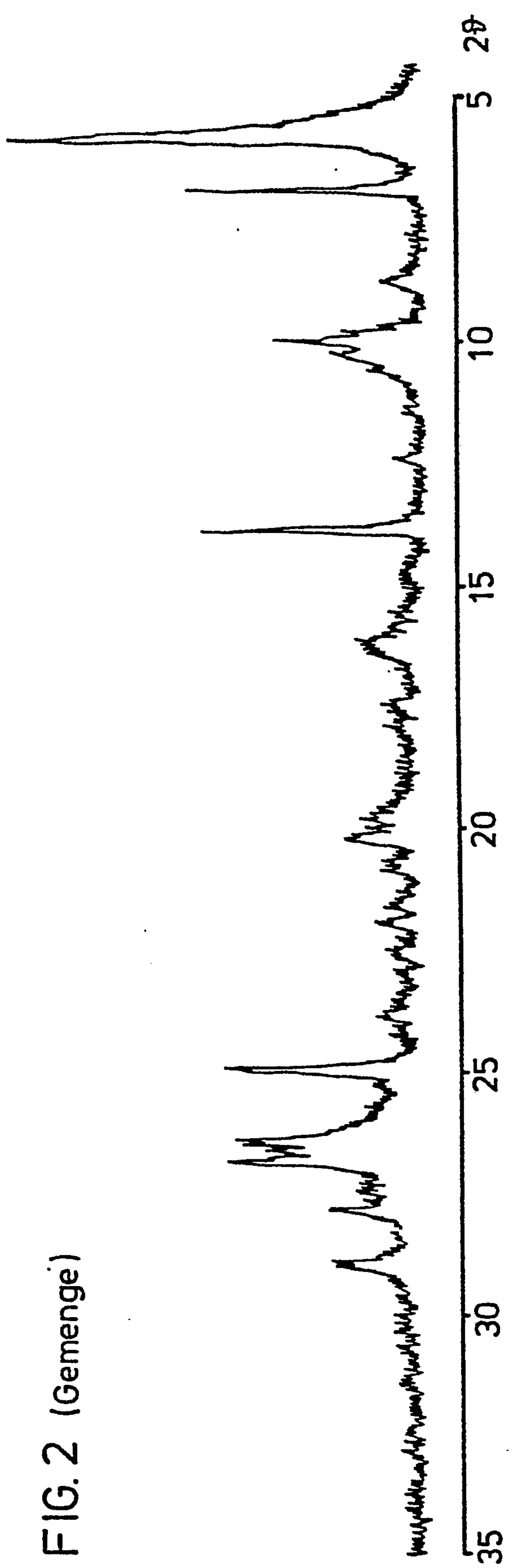


FIG. 2 (Gemenge)

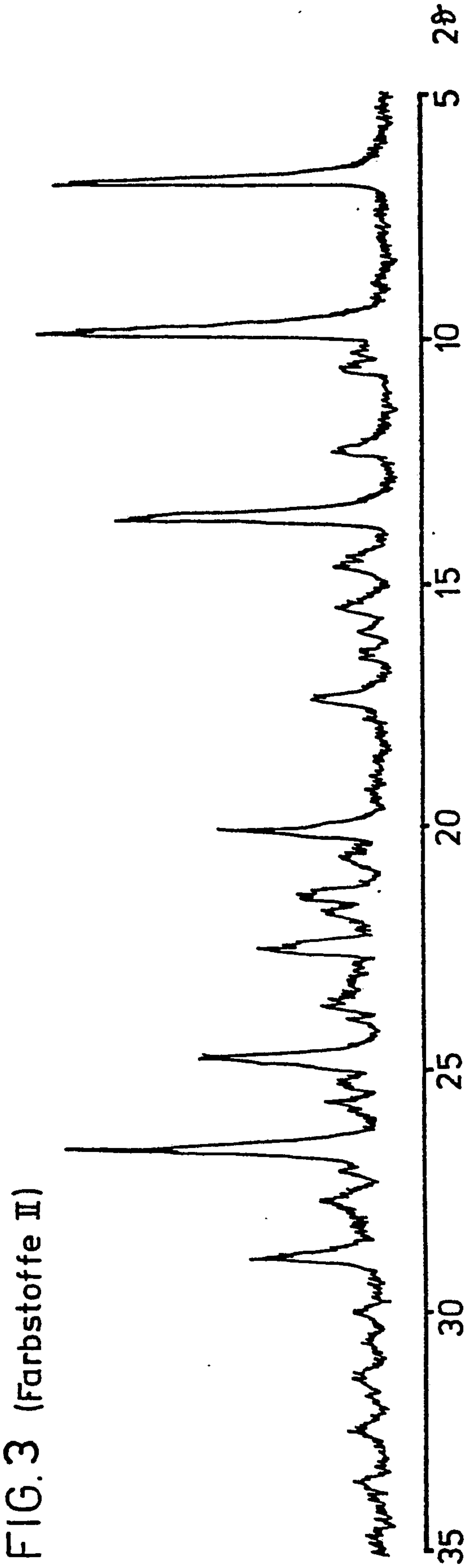


FIG. 3 (Farbstoffe II)